(19) Europäisches Patentamt
European Patent Office
Office européen des brevets

(11) **EP 4 345 063 A2**

(12) **EUROPEAN PATENT APPLICATION**

(43) Date of publication:
**03.04.2024 Bulletin 2024/14**

(21) Application number: **23199819.6**

(22) Date of filing: **26.09.2023**

(51) International Patent Classification (IPC):
**C01B 32/20** $^{(2017.01)}$      **C01B 32/21** $^{(2017.01)}$
**H01M 4/133** $^{(2010.01)}$      **H01M 4/1393** $^{(2010.01)}$

(52) Cooperative Patent Classification (CPC):
**C01B 32/20; C01B 32/21; H01M 4/133;
H01M 4/1393;** C01P 2002/82; C01P 2006/11;
C01P 2006/12; C01P 2006/16; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211214083**

(71) Applicant: **Ningde Amperex Technology Ltd.
Ningde City, Fujian 352100 (CN)**

(72) Inventors:
• **CAI, Yuxin
Ningde City, Fujian Province, People s Republic
of
China, 352100 (CN)**
• **CHEN, Yusheng
Ningde City, Fujian Province, People s Republic
of
China, 352100 (CN)**
• **DONG, Jiali
Ningde City, Fujian Province, People s Republic
of
China, 352100 (CN)**

(74) Representative: **Icosa
83 avenue Denfert-Rochereau
75014 Paris (FR)**

(54) **NEGATIVE ELECTRODE ACTIVE MATERIAL, ELECTROCHEMICAL APPARATUS, AND
ELECTRONIC APPARATUS**

(57) A negative electrode active material includes graphite and amorphous carbon, where according to Raman testing, the negative electrode active material satisfies: $1.6 \leq WD/WG \leq 2.6$, where WD is a peak width at half height of peak D within 1340 $cm^{-1}$ to 1370 $cm^{-1}$ in the Raman spectrum, 40 $cm^{-1} \leq WD \leq 100$ $cm^{-1}$, and WG is a peak width at half height of peak G within 1570 $cm^{-1}$ to 1590 $cm^{-1}$, 15 $cm^{-1} \leq WG \leq 50$ $cm^{-1}$. The negative electrode active material undergoes surface treatment, where the surface thereof has a higher surface lattice defect degree, effectively improving a gram capacity and kinetics performance thereof, thereby making the electrochemical apparatus including the negative electrode active material have both high energy density and good electrochemical performance.

EP 4 345 063 A2

**Description**

**TECHNICAL FIELD**

This application relates to the field of energy storage, and in particular, to a negative electrode active material, an electrochemical apparatus containing such negative electrode active material, and an electronic apparatus.

**BACKGROUND**

Electrochemical apparatuses (for example, lithium-ion batteries) are widely applied due to their advantages of environmental friendliness, high working voltage, large specific capacity, and long cycle life, and have become a new type of green chemical power source having the greatest development potential in the world today. In recent years, medium-sized and large-sized lithium-ion batteries featuring high output are developed and applied to electric vehicles (EV) and large-scale energy storage systems (ESS). With widespread application of the lithium-ion batteries, anxiety for endurance emerges, such that improving energy density has become a key technical problem to be resolved urgently. Optimization of active materials of electrodes is one of research directions for resolving the above problem.

In the prior art, the graphitization level of artificial graphite is elevated or natural graphite is used to improve the gram capacity of negative electrode materials, so as to improve energy density of an electrode assembly. However, this may seriously impact cycling performance, causing a failure in guaranteeing comprehensive use performance of lithium-ion batteries.

**SUMMARY**

This application provides a negative electrode active material, an electrochemical apparatus containing the negative electrode active material, and electronic apparatus to resolve at least one problem in the related field at least to some extent.

According to a first aspect, this application provides a negative electrode active material including graphite and amorphous carbon, where the negative electrode active material satisfies $1.6 \leq W_D/W_G \leq 2.6$ according to Raman testing, where $W_D$ is a peak width at half height of peak D within 1340 cm$^{-1}$ to 1370 cm$^{-1}$ in the Raman spectrum, and 40 cm$^{-1} \leq W_D \leq 100$ cm$^{-1}$; and $W_G$ is a peak width at half height of peak G within 1570 cm$^{-1}$ to 1590 cm$^{-1}$ in Raman spectra and 15 cm$^{-1} \leq W_G \leq 50$ cm$^{-1}$. In this application, the peak width at half height of peak D represents the surface grain size of the negative electrode active material, primarily reflecting surface lattice defect degree thereof. The peak width at half height of peak G represents the crystallinity of the negative electrode active material. $W_D/W_G$ being in the foregoing range means a high surface lattice defect degree of the negative electrode active material, where such surface lattice defect facilitates intercalation of active ions, improving kinetics performance of the negative electrode active material; and more importantly, such surface lattice defect can further store more active ions, improving a gram capacity of the negative electrode active material. In some embodiments, $1.7 \leq W_D/W_G \leq 2.5$. In some embodiments, $2 \leq W_D/W_G \leq 2.5$.

In some embodiments, 40 cm$^{-1} \leq W_D \leq 60$ cm$^{-1}$. In some embodiments, 15 cm$^{-1} \leq W_G \leq 35$ cm$^{-1}$.

In some embodiments, the negative electrode active material satisfies: $0.08 \leq ID/IG \leq 1.2$, where ID is an intensity of the peak D, and IG is an intensity of the peak G. A ratio value of ID/IG can represent the crystal defect degree of the negative electrode active material, where a larger value means a higher defect degree. A high defect degree can increase channels for deintercalation and intercalation of active ions and boost the speed of deintercalation and intercalation of active ions, improving kinetics performance of the negative electrode active material. However, excessive defects may lead to decrease in performance such as first-cycle coulombic efficiency, cycling performance, and storage performance. With the ratio value of ID/IG in the foregoing range, the electrochemical apparatus can present good kinetics performance, and the performance thereof such as the first-cycle coulombic efficiency and cycling performance may not obviously decrease. In some embodiments, $0.1 \leq ID/IG \leq 1.0$.

In some embodiments, the specific surface area of the negative electrode active material is B 1, where 0.8 cm$^2$/g$\leq$B1$\leq$5.4 cm$^2$/g. A smaller specific surface area of the negative electrode active material comes with a smaller contact area between the negative electrode active material and an electrolyte, decreasing active ions consumed by the electrochemical apparatus to form an SEI film for the first time, thereby improving the first-cycle coulombic efficiency. However, an undesirably small specific surface area makes electrolyte infiltration and active diffusion difficult, affecting the kinetics performance of the electrochemical apparatus. In some embodiments, 1.0 cm$^2$/g$\leq$B1$\leq$4.5 cm$^2$/g.

In some embodiments, the negative electrode active material includes a base surface and an end surface, where a specific surface area of the base surface accounts for 40% to 70% of a specific surface area of the negative electrode active material. Intercalation of lithium ions occurs primarily through a graphite end surface and some defect sites, and the electrolyte has a side reaction with the graphite on the end surface to form the SEI film. A higher proportion of a specific surface area of the base surface causes fewer side reactions, improving the first-cycle coulombic efficiency and cycling stability of the electrochemical apparatus. However, an undesirably high proportion of the base surface may impact the kinetics performance. With the proportion of the base surface in the foregoing range, the electrochemical apparatus can present good first-cycle coulombic efficiency and cycling performance, while also guaranteeing the kinetics performance. In some embodiments, the specific surface area of the base surface accounts for 45% to 65% of a specific surface area of the negative electrode active material.

In some embodiments, the negative electrode active material includes a base surface and an end surface, where roughness of the end surface is greater than roughness of the base surface.

In some embodiments, the negative electrode active material has a most probable pore size of 2.5 nm to 3.5 nm. The most probable pore size of the negative electrode active material represents a pore size of the negative electrode active material that exhibits the largest change in pore volume in response to a change in pore size. That is, in the differential curve of pore size-pore volume, the pore size corresponding to the highest peak is referred to the most probable pore size. When the most probable pore size of the negative electrode active material of this application is within the foregoing range, on one hand, lithium is stored to increase capacity; on the other hand, the pores serve as channels for intercalation of lithium to improve the kinetics performance. However, an undesirably large pore size may cause an increase in side reactions. In some embodiments, the negative electrode active material has a most probable pore size of 2.7 nm to 3.3 nm.

In some embodiments, a pore volume of the most probable pore size of the negative electrode active material accounts for 3% to 8% of the pore volume of the negative electrode active material. In some embodiments, a pore volume of the most probable pore size of the negative electrode active material accounts for 3.5% to 7% of the pore volume of the negative electrode active material.

In some embodiments, the negative electrode active material has a specific surface area B2 after being pressed under a pressure of 1t, where $(B2-B1)/B1 \times 100\% \leq 80\%$. That the specific surface areas of the negative electrode active material before and after pressure being applied on the negative electrode active material satisfy the foregoing relation means that the negative electrode active material has a stable structure, facilitating improvement of swelling performance of the electrochemical apparatus during cycling.

In some embodiments, oxygen in the negative electrode active material has a mass percentage of 2% to 5% according to an X-ray photoelectron spectroscopy testing. The surface oxygen percentage can reflect the surface lattice defect degree of the negative electrode active material to some extent. With an undesirably low surface oxygen percentage, the surface does not have sufficient defects, failing to improve the gram capacity and kinetics performance of the material. With an undesirably high surface oxygen percentage, excessive defects are formed, leading to a decrease in the first-cycle coulombic efficiency and an increase in electrolyte consumption. With the oxygen percentage in the foregoing range, the negative electrode active material has a proper surface crystal defect degree, optimizing the gram capacity and improving kinetics without affecting other performance. In some embodiments, the oxygen in the negative electrode active material has a mass percentage of 2.2% to 4.0%.

In some embodiments, the negative electrode active material has a tap density of 0.90 g/cm$^3$ to 1.05 g/cm$^3$. In some embodiments, the negative electrode active material has a powder compacted density of 1.9 g/cm$^3$ to 2.05 g/cm$^3$ after being pressed under a pressure of 5t. The powder compacted density is increased so that the negative electrode active material can be used for design of electrode plates having high compacted density, thereby increasing the volumetric energy density of the electrochemical apparatus. However, with an undesirably high compacted density, the negative electrode active material is apt to have inter-layer slip, and the material becomes soft, so that rebound of the electrode plate decreases and pores formed by accumulation of inner particles are reduced, making it difficult for the electrolyte to infiltrate and for active ions to diffuse, thereby affecting the performance of the electrochemical apparatus.

In some embodiments, a preparation method of negative electrode active material includes the following steps:

S 1: providing a graphite material;
S2: mixing the graphite material in S1 and a carbonaceous precursor to obtain a graphite material coated with the carbonaceous precursor; and
S3: mixing the graphite material coated with the carbonaceous precursor in S2 and a bicarbonate to obtain a mixture, and then performing heating treatment on the mixture to obtain the negative electrode active material.

In the preparation method of negative electrode active material of this application, the surface of the graphite material is coated with the carbonaceous precursor first to facilitate its reactions with gas in subsequent processes; then, a solid matter that can be decomposed by heat to generate oxidizing atmosphere is selected to be mixed with the graphite material preferentially, so that the graphite can have a more uniform and controllable oxidation reaction on its surface, and the resulting negative electrode active material can have a proper oxidation degree on its surface, guaranteeing both a high gram capacity and good kinetics performance.

According to a second aspect, this application provides an electrochemical apparatus including a negative electrode, where the negative electrode includes a negative electrode current collector and a negative electrode active material layer disposed on at least one surface of the negative electrode current collector, and the negative electrode active material layer includes the negative electrode active material according to the first aspect.

In some embodiments, the negative electrode active material has a specific surface area of 4.35 $cm^2/g$ to 5.9 $m^2/g$.

In some embodiments, according to a charge-discharge testing on a button battery composed of the negative electrode and a lithium metal, the button battery has a reversible capacity of C1 mAh/g at a voltage ranging from 0.005 V to 2 V, and has a reversible capacity of C2 mAh/g at a voltage ranging from 0 V to 2 V, where C2-C1$\geq$1.

According to a third aspect, this application further provides an electronic apparatus including the electrochemical apparatus according to the second aspect.

In this application, the negative electrode active material undergoing surface treatment makes the surface thereof have a higher surface lattice defect degree, facilitating fast intercalation of active ions, and improving kinetics performance of the negative electrode active material. In addition, more active ions can be stored to improve a gram capacity of the negative electrode active material, thereby making the electrochemical apparatus including the negative electrode active material have both high energy density and good electrochemical performance.

## BRIEF DESCRIPTION OF DRAWINGS

To describe embodiments of this application, the following briefly describes the accompanying drawings required for describing the embodiments of this application or the prior art. Apparently, the accompanying drawings described below are merely some embodiments of this application. Persons skilled in the art may still derive drawings for other embodiments from structures shown in these accompanying drawings without creative efforts.

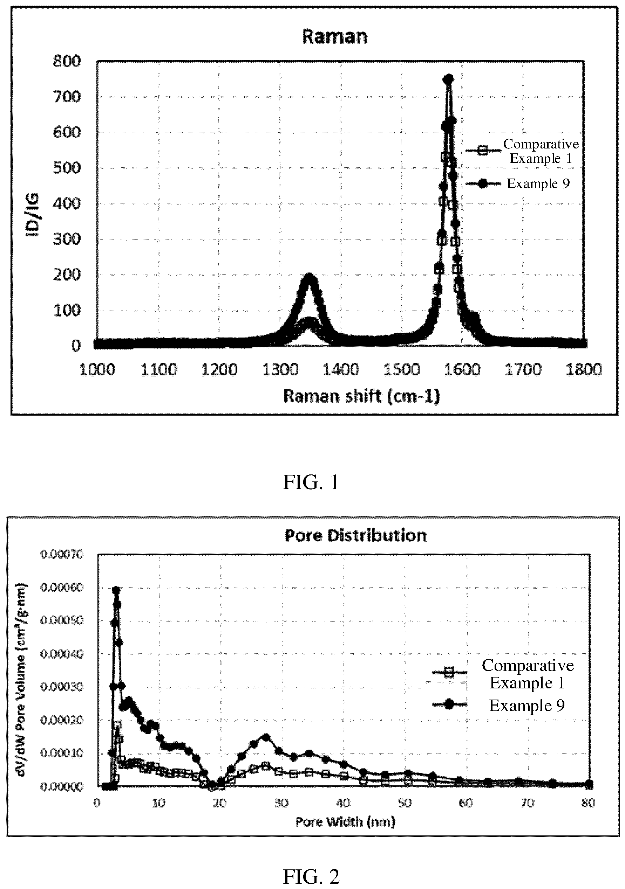

FIG. 1 shows Raman patterns of negative electrode active materials in Example 9 and Comparative Example 1 of this application.
FIG. 2 shows differential curves of pore size-pore volume of negative electrode active materials in Example 9 and Comparative Example 1 of this application.
FIG. 3 is an SEM diagram of a negative electrode active material in Example 9 of this application.

## DETAILED DESCRIPTION

Embodiments of this application are described in detail below. The embodiments of this application should not be construed as limitations on the application.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In the specific embodiments and claims, an item list connected by the terms "at least one of", "at least one piece of", "at least one kind of" or other similar terms may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

I. Negative electrode active material

A negative electrode active material provided in this application includes graphite and amorphous carbon, where the negative electrode active material satisfies 1.6$\leq W_D/W_G \leq$2.6 according to Raman testing, where $W_D$ is a peak width at half height of peak D within 1340 $cm^{-1}$ to 1370 $cm^{-1}$ in the Raman spectrum, 40 $cm^{-1} \leq W_D \leq$100 $cm^{-1}$; and $W_G$ is a peak width at half height of peak G within 1570 $cm^{-1}$ to 1590 $cm^{-1}$, 15 $cm^{-1} \leq W_G \leq$50 $cm^{-1}$. In this application, the peak width at half height of peak D represents the surface grain size of the negative electrode active material, primarily reflecting surface lattice defect degree thereof. The peak width at half height of peak G represents crystallinity of the negative electrode active material. $W_D/W_G$ being in the foregoing range means a high surface lattice defect degree of the negative electrode active material, where such surface lattice defect facilitates intercalation of active ions, improving kinetics performance of the negative electrode active material; and more importantly, such surface lattice defect can further store more active ions, improving a gram capacity of the negative electrode active material. In some embodiments, $W_D/W_G$ may be 1.65, 1.75, 1.85, 1.9, 1.95, 2.0, 2.05, 2.15, 2.25, 2.35, 2.45, or 2.55, or in a range defined by any two of these values. In some embodiments, 1.7$\leq W_D/W_G \leq$2.5. In some embodiments, 2$\leq W_D/W_G \leq$2.5.

In some embodiments, $W_D$ is 42 cm$^{-1}$, 44 cm$^{-1}$, 46 cm$^{-1}$, 48 cm$^{-1}$, 50 cm$^{-1}$, 52 cm$^{-1}$, 54 cm$^{-1}$, 56 cm$^{-1}$, 58 cm$^{-1}$, 60 cm$^{-1}$, 65 cm$^{-1}$, 70 cm$^{-1}$, 75 cm$^{-1}$, 80 cm$^{-1}$, 85 cm$^{-1}$, 90 cm$^{-1}$, or 95 cm$^{-1}$, or in a range defined by any two of these values. In some embodiments, 40 cm$^{-1}$$\leq$$W_D$$\leq$60 cm$^{-1}$. $W_D$ being undesirably high means an undesirably small surface grain size of the material and many defects, leading to excessive side reactions and a low first-cycle coulombic efficiency of the electrochemical apparatus. $W_D$ being undesirably low means that the surface of the material does not undergo thorough treatment, causing insufficient defects to store lithium to increase capacity and failing to improve the kinetics performance.

In some embodiments, $W_G$ is 16 cm$^{-1}$, 17 cm$^{-1}$, 18 cm$^{-1}$, 19 cm$^{-1}$, 20 cm$^{-1}$, 21 cm$^{-1}$, 22 cm$^{-1}$, 23 cm$^{-1}$, 24 cm$^{-1}$, 25 cm$^{-1}$, 26 cm$^{-1}$, 27 cm$^{-1}$, 28 cm$^{-1}$, 29 cm$^{-1}$, 30 cm$^{-1}$, 31 cm$^{-1}$, 32 cm$^{-1}$, 33 cm$^{-1}$, 34 cm$^{-1}$, 37 cm$^{-1}$, 40 cm$^{-1}$, 43 cm$^{-1}$, 45 cm$^{-1}$, or 47 cm$^{-1}$, or in a range defined by any two of these values. In some embodiments, 15 cm$^{-1}$$\leq$$W_G$$\leq$35 cm$^{-1}$. $W_G$ being undesirably high means that crystallinity is poor and a crystal structure is seriously damaged, causing the first-cycle coulombic efficiency to obviously decrease, and reducing lithium-storage sites between active material layers, thereby reducing capacity. $W_G$ being undesirably low means that the material has good crystallinity and high graphitization level, such that the capacity and first-cycle coulombic efficiency are high, but kinetics performance is poor and the electrochemical apparatus is unstable during high-temperature cycling.

In some embodiments, the negative electrode active material satisfies: 0.08$\leq$ID/IG$\leq$1.2, where ID is an intensity of the peak D, and IG is an intensity of the peak G. A ratio value of ID/IG can represent the crystal defect degree of the negative electrode active material, where a larger value means a higher defect degree. A high defect degree can increase channels for deintercalation and intercalation of active ions and boost the speed of deintercalation and intercalation of active ions, improving kinetics performance of the negative electrode active material. However, excessive defects may lead to decrease in performance of the electrochemical apparatus, such as first-cycle coulombic efficiency, cycling performance, and storage performance. With the ratio value of ID/IG in the foregoing range, the electrochemical apparatus can present good kinetics performance, and the performance thereof such as the first-cycle coulombic efficiency and cycling performance may not obviously decrease. In some embodiments, ID/IG is 0.09, 0.15, 0.2, 0.25, 0.3, 0.35, 0.4, 0.45, 0.5, 0.55, 0.6, 0.65, 0.7, 0.75, 0.8, 0.85, 0.9, 0.95, 1.0, 1.05, 1.1, or 1.15, or in a range defined by any two of these values. In some embodiments, 0.1$\leq$ID/IG$\leq$1.0.

In some embodiments, the specific surface area of the negative electrode active material is B 1, where 0.8 cm$^2$/g$\leq$B1$\leq$5.4 cm$^2$/g. A smaller specific surface area of the negative electrode active material comes with a smaller contact area between the negative electrode active material and an electrolyte, decreasing active ions consumed by the electrochemical apparatus to form an SEI film for the first time, thereby improving the first-cycle coulombic efficiency. However, an undesirably small specific surface area makes electrolyte infiltration and active diffusion difficult, affecting the kinetics performance of the electrochemical apparatus. In some embodiments, B1 is 0.9 cm$^2$/g, 1.1 cm$^2$/g, 1.3 cm$^2$/g, 1.5 cm$^2$/g, 1.7 cm$^2$/g, 2.0 cm$^2$/g, 2.3 cm$^2$/g, 2.5 cm$^2$/g, 2.7 cm$^2$/g, 3.0 cm$^2$/g, 3.3 cm$^2$/g, 3.5 cm$^2$/g, 3.7 cm$^2$/g, 4.0 cm$^2$/g, 4.3 cm$^2$/g, 4.7 cm$^2$/g, or 4.9 cm$^2$/g, or in a range defined by any two of these values. In some embodiments, 1.0 cm$^2$/g$\leq$B1$\leq$4.5 cm$^2$/g.

In some embodiments, the negative electrode active material includes a base surface and an end surface, where a specific surface area of the base surface accounts for 40% to 70% of a specific surface area of the negative electrode active material. A higher proportion of a specific surface area of the base surface causes fewer side reactions, improving the first-cycle coulombic efficiency and cycling stability of the electrochemical apparatus. However, an undesirably high proportion of the base surface may impact the kinetics performance. With the proportion of the base surface in the foregoing range, the electrochemical apparatus can present desirable first-cycle coulombic efficiency and cycling performance, and the kinetics performance can be guaranteed. In some embodiments, the specific surface area of the base surface accounts for 42%, 44%, 46%, 48%, 50%, 52%, 54%, 56%, 58%, 60%, 62%, 64%, 66%, or 68% of the specific surface area of the negative electrode active material, or a range defined by any two of these values. In some embodiments, the specific surface area of the base surface accounts for 45% to 65% of a specific surface area of the negative electrode active material.

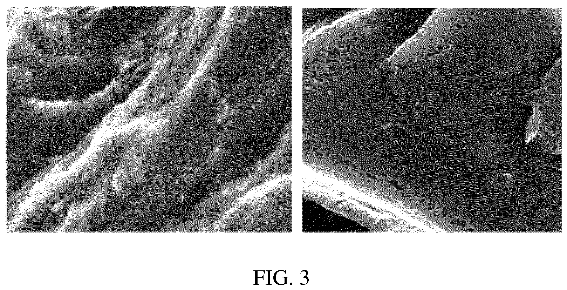

In some embodiments, the negative electrode active material includes a base surface and an end surface, where roughness of the end surface is greater than roughness of the base surface. In some embodiments, as shown in FIG. 3, the roughness of the end surface (on the left) of the negative electrode active material is greater than roughness of the base surface (on the right) of the negative electrode active material.

In some embodiments, the negative electrode active material has a most probable pore size of 2.5 nm to 3.5 nm. The most probable pore size of the negative electrode active material represents a pore size of the negative electrode active material that exhibits the largest change in pore volume in response to a change in pore size. When the most probable pore size of the negative electrode active material of this application is within the foregoing range, on one hand, lithium is stored to increase capacity, and on the other hand, the pores serve as channels for intercalation of lithium to improve the kinetics performance. However, an undesirably large pore size may cause an increase in side reactions. In some embodiments, the most probable pore size of the negative electrode active material is 2.55 nm, 2.6 nm, 2.65 nm, 2.7 nm, 2.75 nm, 2.8 nm, 2.85 nm, 2.9 nm, 2.95 nm, 3.0 nm, 3.05 nm, 3.1 nm, 3.15 nm, 3.2 nm, 3.25 nm, 3.3 nm, 3.35 nm, 3.4 nm, or 3.45 nm, or in a range defined by any two of these values. In some embodiments, the negative electrode active material has a most probable pore size of 2.7 nm to 3.3 nm.

In some embodiments, a pore volume of the most probable pore size of the negative electrode active material accounts for 3% to 8% of the pore volume of the negative electrode active material. In some embodiments, a pore volume of the most probable pore size of the negative electrode active material accounts for 4%, 4.5%, 5%, 5.5%, 6%, 6.5%, 7%, or 7.5% of the pore volume of the negative electrode active material, or a range defined by any two of these values. In some embodiments, a pore volume of the most probable pore size of the negative electrode active material accounts for 3.5% to 7% of the pore volume of the negative electrode active material.

In some embodiments, the negative electrode active material has a specific surface area B2 after being pressed under a pressure of 1t, where $(B2-B1)/B1 \times 100\% \leq 80\%$. The specific surface areas of the negative electrode active material before and after the negative electrode active material is pressed under the pressure satisfying the foregoing relation means that the negative electrode active material has a stable structure, facilitating improvement of swelling performance of the electrochemical apparatus during cycle. In some embodiments, $10\% < (B2-B1)/B1 \times 100\% \leq 80\%$. In some embodiments, the value of $(B2-B1)/B1 \times 100\%$ is 15%, 20%, 25%, 30%, 35%, 40%, 45%, 50%, 55%, 60%, 65%, 70%, or 75%, or in a range defined by any two of these values.

In some embodiments, $4.0 \text{ cm}^2/\text{g} \leq B2 \leq 6.0 \text{ cm}^2/\text{g}$. In some embodiments, B2 is $4.1 \text{ cm}^2/\text{g}$, $4.3 \text{ cm}^2/\text{g}$, $4.5 \text{ cm}^2/\text{g}$, $4.7 \text{ cm}^2/\text{g}$, $5.0 \text{ cm}^2/\text{g}$, $5.3 \text{ cm}^2/\text{g}$, $5.5 \text{ cm}^2/\text{g}$, or $5.7 \text{ cm}^2/\text{g}$, or in a range defined by any two of these values. In this application, B2 is a specific surface area of the negative electrode active material after being pressed under a pressure of 1t. The method for applying pressure on the negative electrode is as follows: an electronic pressure testing machine (UTM7305 of SUNS) is used to place $1.0 \text{ g} \pm 0.05 \text{ g}$ of negative electrode active material powder onto a mold having a diameter of 13 mm, a pressure of 1t is applied on the negative electrode active material powder and is maintained for 5s, and the pressure is released and the powder is removed.

In some embodiments, oxygen in the negative electrode active material has a mass percentage of 2% to 5% according to the X-ray photoelectron spectroscopy testing. Surface oxygen percentage can reflect the surface lattice defect degree of the negative electrode active material to some extent. With an undesirably low surface oxygen percentage, the surface does not have sufficient defects, failing to improve the gram capacity and kinetics performance of the material. With an undesirably high surface oxygen percentage, excessive defects are formed, resulting in a decrease in the first-cycle coulombic efficiency and an increase in electrolyte consumption. With the oxygen percentage in the foregoing range, the negative electrode active material has a proper surface crystal defect degree, optimizing the gram capacity and improving kinetics without affecting other performance. In some embodiments, the mass percentage of the oxygen in the negative electrode active material is 2.1%, 2.3%, 2.5%, 2.7%, 3.0%, 3.3%, 3.5%, 3.7%, 3.9%, 4.3%, 4.5%, or 4.7%, or in a range defined by any two of these values. In some embodiments, the oxygen in the negative electrode active material has a mass percentage of 2.2% to 4.0%.

In some embodiments, the negative electrode active material has a tap density of $0.90 \text{ g/cm}^3$ to $1.05 \text{ g/cm}^3$. In some embodiments, the tap density of the negative electrode active material is $0.90 \text{ g/cm}^3$, $0.91 \text{ g/cm}^3$, $0.92 \text{ g/cm}^3$, $0.93 \text{ g/cm}^3$, $0.95 \text{ g/cm}^3$, $0.96 \text{ g/cm}^3$, $0.97 \text{ g/cm}^3$, $0.98 \text{ g/cm}^3$, $0.99 \text{ g/cm}^3$, $1.00 \text{ g/cm}^3$, $1.01 \text{ g/cm}^3$, $1.02 \text{ g/cm}^3$, $1.03 \text{ g/cm}^3$, or $1.04 \text{ g/cm}^3$ or in a range defined by any two of these values.

In some embodiments, the negative electrode active material has a powder compacted density of $1.9 \text{ g/cm}^3$ to $2.05 \text{ g/cm}^3$ after being pressed under a pressure of 5t. The powder compacted density is increased so that the negative electrode active material can be used for design of electrode plates having high compacted density, thereby increasing the volumetric energy density of the electrochemical apparatus. However, with an undesirably high compacted density, the negative electrode active material is apt to have inter-layer slip, and the material becomes soft, so that rebound of the electrode plate decreases and pores formed by accumulation of inner particles are reduced, making it difficult for the electrolyte to infiltrate and active ions to diffuse, thereby affecting the performance of the electrochemical apparatus. In some embodiments, the compacted density of the negative electrode active material after being pressed under a pressure of 5t is $1.90 \text{ g/cm}^3$, $1.92 \text{ g/cm}^3$, $1.93 \text{ g/cm}^3$, $1.94 \text{ g/cm}^3$, $1.96 \text{ g/cm}^3$, $1.97 \text{ g/cm}^3$, $1.98 \text{ g/cm}^3$, $1.99 \text{ g/cm}^3$, $2.01 \text{ g/cm}^3$, $2.02 \text{ g/cm}^3$, $2.03 \text{ g/cm}^3$, or $2.04 \text{ g/cm}^3$, or in a range defined by any two of these values.

In some embodiments, a preparation method of negative electrode active material includes the following steps:

S1: providing a graphite material;
S2: mixing the graphite material in S1 and a carbonaceous precursor to obtain a graphite material coated with the carbonaceous precursor; and
S3: mixing the graphite material coated with the carbonaceous precursor in S2 and a bicarbonate to obtain a mixture, and then performing heating treatment on the mixture to obtain the negative electrode active material.

In the preparation method of negative electrode active material of this application, the surface of the graphite material is coated with the carbonaceous precursor first to facilitate its reactions with gas in subsequent processes; then, a solid matter that can be decomposed by heat to generate oxidizing atmosphere is selected to be mixed with the graphite material preferentially, so that the graphite can have a more uniform and controllable oxidation reaction on its surface, and the resulting negative electrode active material can have a proper oxidation degree on its surface, guaranteeing both a high gram capacity and good kinetics performance.

In some embodiments, the providing a graphite material in S1 includes the following steps: the graphite precursor is mixed with a binder to obtain a first mixture, and first heating treatment is performed on the first mixture to obtain a graphite material precursor; and the graphite material precursor is graphitized to obtain the graphite material.

In some embodiments, the graphite precursor is selected from at least one of the organics: coal tar pitch, coal heavy oil, atmospheric residue, petroleum heavy oil, aromatic hydrocarbon, nitrogen-containing cyclic compound, sulfur-containing cyclic compound, polyphenyl, polyvinyl chloride, polyvinyl alcohol, polyacrylonitrile, polyvinyl butyral, natural polymer, polyphenylene sulfide, polyphenylene ether, furfuryl alcohol resin, phenol phenolic resin, or imide resin. In some embodiments, the graphite precursor is selected from at least one of petroleum coke or pitch coke. In some embodiments, the binder is selected from at least one of pitch, resin, or tar. In some embodiments, the binder is selected from hard pitch. In some embodiments, the hard pitch has a softening point of 200°C to 250°C, for example, 210°C, 220°C, or 240°C. In some embodiments, a ratio of the graphite precursor to the binder is 1:(0.1-1), for example, 1:0.1, 1:0.2, 1:0.3, 1:0.4, 1:0.5, 1:0.6, 1:0.7, 1:0.8, or 1:0.9.

In some embodiments, a temperature for the first heating treatment is 450°C to 550°C, for example, 460°C, 470°C, 480°C, 490°C, 500°C, 510°C, 520°C, 530°C, or 540°C. In some embodiments, time for the first heating treatment is 1 h to 5 h, for example, 2 h, 3 h, or 4 h. In some embodiments, a temperature for the graphitization is 2500°C to 3200°C, for example, 2600°C, 2700°C, 2800°C, 2900°C, 3000°C, or 3100°C. In some embodiments, time for the graphitization is 10 h to 200 h, for example, 20 h, 40 h, 60 h, 80 h, 100 h, 120 h, 140 h, 160 h, or 180 h.

In some embodiments, in S2, the carbonaceous precursor is selected from at least one of pitch, resin, or coal tar. In some embodiments, the pitch is selected from at least one of coal tar, tar medium oil, tar heavy oil, naphthalene oil, anthracene oil, coal tar pitch, pitch oil, mesophase pitch, oxygen-crosslinked petroleum pitch, or heavy oil. In some embodiments, the resin is selected from at least one of thermoplastic resin such as polyvinyl alcohol and acrylic acid, or thermosetting resin such as phenolic resin and furan resin. In some embodiments, the pitch has a softening point of 40°C to 90°C, for example, 50°C, 60°C, 70°C, or 80°C.

In some embodiments, the mixture in S2 has a temperature of 50°C to 100°C, for example, 60°C, 70°C, 80°C, or 90°C. In some embodiments, in S2, based on the mass of the graphite material, the carbonaceous precursor has a mass percentage of 0.1% to 15%, for example, 1%, 3%, 5%, 7%, 9%, 10%, 12%, or 14%.

In some embodiments, in S3, the bicarbonate is selected from ammonium bicarbonate and/or sodium bicarbonate. In some embodiments, in S3, based on the mass of the graphite material coating the carbonaceous precursor, the bicarbonate has a mass percentage of 0.5% to 15%, for example, 1%, 3%, 5%, 7%, 9%, 10%, 12%, or 14%. In some embodiments, the temperature of the heating treatment in S3 is 50°C to 1000°C, for example, 100°C, 150°C, 200°C, 250°C, 300°C, 350°C, 400°C, 450°C, 500°C, 550°C, 650°C, 700°C, 800°C, or 900°C. In some embodiments, time for the heating treatment in S3 is 4 h to 10 h, for example, 5 h, 6 h, 7 h, 8 h, or 9 h. In some embodiments, the heating treatment in S3 is performed in an inert atmosphere, for example, in a nitrogen atmosphere or an argon atmosphere.

II. Electrochemical apparatus

The electrochemical apparatus of this application includes a negative electrode, where the negative electrode includes a negative electrode current collector and a negative electrode active material layer disposed on at least one surface of the negative electrode current collector, and the negative electrode active material layer includes a negative electrode active material according to the first aspect.

In some embodiments, the negative electrode active material has a specific surface area of 4.35 $cm^2$/g to 5.9 $m^2$/g. In some embodiments, the specific surface area of the negative electrode active material is 4.5 $cm^2$/g, 4.7 $cm^2$/g, 5.0 $cm^2$/g, 5.3 $cm^2$/g, 5.5 $cm^2$/g, or 5.7 $cm^2$/g, or in a range defined by any two of these values. In this application, the specific surface area of the negative electrode active material in the electrochemical apparatus is a specific surface area obtained after disassembling a negative electrode from the electrochemical apparatus discharging to 3 V and scraping powder on the negative electrode plate.

In some embodiments, according to the charge-discharge testing on a button battery composed of the negative electrode and a lithium metal, the button battery has a reversible capacity of C1 mAh/g at a voltage ranging from 0.005 V to 2 V, and has a reversible capacity of C2 mAh/g at a voltage ranging from 0 V to 2 V, where C2-C1≥1. In some embodiments, the value of C2-C1 is 1 mAh/g, 2 mAh/g, 3 mAh/g, 4 mAh/g, 5 mAh/g, or 6 mAh/g, or in a range defined by any two of these values. In this application, the negative electrode forming the button battery is a negative electrode disassembled after the electrochemical apparatus is discharged to 3 V.

In some embodiments, the electrochemical apparatus includes a lithium-ion battery, where after 500 cycles at 25°C, the lithium-ion battery has a swelling rate less than 9%. In some embodiments, the lithium-ion battery has a swelling rate less than 8% or 7%.

In some embodiments, the negative electrode active material layer further includes an adhesive. In some embodiments, the adhesive includes but is not limited to: polyvinyl alcohol, carboxy methyl cellulose, sodium carboxy methyl cellulose, hydroxypropyl cellulose, diacetyl cellulose, polyvinyl chloride, carboxylated polyvinyl chloride, polyvinyl fluoride, polyvinylpyrrolidone, polyurethane, polytetrafluoroethylene, poly(1,1-difluoroethylene), polyethylene, polypropylene, styrene-butadiene rubber, acrylic acid (ester) styrene-butadiene rubber, epoxy resin, or nylon.

In some embodiments, the negative electrode active material layer includes a conductive material. In some embodiments, the conductive material includes but is not limited to natural graphite, artificial graphite, carbon black, acetylene black, Ketjen black, carbon fiber, metal powder, metal fiber, copper, nickel, aluminum, silver, or polyphenylene derivatives.

In some embodiments, the negative electrode current collector includes but is not limited to a copper foil, a nickel foil, a stainless steel foil, a titanium foil, foamed nickel, foamed copper, or a polymer base coated with conductive metal.

The electrochemical apparatus in this application further includes a positive electrode. Materials, compositions and manufacturing methods which can be used for the positive electrode in the embodiments of this application include any technologies disclosed in the prior art.

In some embodiments, the positive electrode includes a current collector and a positive electrode active material layer located on the current collector.

In some embodiments, the positive electrode active material includes but is not limited to lithium cobalt oxide ($LiCoO_2$), lithium-nickel-cobalt-manganese (NCM) ternary material, lithium iron phosphate ($LiFePO_4$), or lithium manganate ($LiMn_2O_4$).

In some embodiments, the positive electrode active material layer further includes an adhesive, and optionally includes a conductive material. The adhesive enhances adhesion between positive electrode active material particles and adhesion between the positive electrode active material and the current collector.

In some embodiments, the adhesive includes but is not limited to polyvinyl alcohol, hydroxypropyl cellulose, diacetyl cellulose, polyvinyl chloride, carboxylated polyvinyl chloride, polyvinyl fluoride, polyvinylpyrrolidone, polyurethane, polytetrafluoroethylene, poly(1,1-difluoroethylene), polyethylene, polypropylene, acrylic acid (ester) styrene-butadiene rubber, epoxy resin, or nylon.

In some embodiments, the conductive material includes but is not limited to carbon-based materials, metal-based materials, conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments, the current collector may include but is not limited to aluminum.

The positive electrode can be prepared by a preparation method known in the art. For example, the positive electrode may be obtained by using the following method: mixing the active material, the conductive material, and the binder in a solvent to prepare an active material composition, and applying the active material composition on the current collector. In some embodiments, the solvent may include but is not limited to N-methylpyrrolidone.

The electrochemical apparatus of this application further includes an electrolyte. Electrolytes that can be used in the embodiments of this application may be electrolytes known in the prior art.

In some embodiments, the electrolyte includes an organic solvent, a lithium salt, and an additive. The organic solvent of the electrolyte according to this application may be any organic solvent known in the prior art which can be used as a solvent for electrolytes. The electrolytic salt used in the electrolyte according to this application is not limited, and may be any electrolytic salt known in the prior art. The additive of the electrolyte according to this application may be any additive known in the prior art which can be used as an additive for electrolytes.

In some embodiments, the organic solvent includes but is not limited to: ethylene carbonate (EC), propylene carbonate (PC), diethyl carbonate (DEC), ethyl methyl carbonate (EMC), dimethyl carbonate (DMC), propylene carbonate, or ethyl propionate.

In some embodiments, the lithium salt includes at least one of an organic lithium salt or an inorganic lithium salt.

In some embodiments, the lithium salt includes but is not limited to lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$(LiT-FSI), lithium bis(fluorosulfonyl)imide $Li(N(SO_2F)_2)$(LiFSI), lithium bis(oxalate) borate $LiB(C_2O_4)_2$(LiBOB), or lithium difluoro(oxalato)borate $LiBF_2(C_2O_4)$(LiDFOB).

In some embodiments, the lithium salt in the electrolyte has a concentration of 0.5 mol/L to 3 mol/L, 0.5 mol/L to 2 mol/L, or 0.8 mol/L to 1.5 mol/L.

The electrochemical apparatus of this application has a separator sandwiched between the positive electrode and the negative electrode to prevent short circuits. A material and shape of the separator that can be used in the embodiments of this application is not specifically limited, and any material and shape disclosed in the prior art may be used for the separator. In some embodiments, the separator includes a polymer or an inorganic substance formed by a material stable to the electrolyte of this application.

For example, the separator may include a substrate layer and a surface treatment layer. The base material layer is a non-woven fabric, membrane, or composite membrane having a porous structure, and a material of the base material layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic layer, or may be a layer formed by mixing polymer and inorganic substance.

The inorganic layer includes inorganic particles and a binder. The inorganic particles are selected from one or a combination of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from one or a combination of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene.

The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

In some embodiments, the electrochemical apparatus of this application includes but is not limited to a primary battery or a secondary battery.

In some embodiments, the electrochemical apparatus is a lithium secondary battery.

In some embodiments, the lithium secondary battery includes but is not limited to a lithium metal secondary battery, a lithium-ion secondary battery, a lithium polymer secondary battery, or a lithium-ion polymer secondary battery.

III. Electronic apparatus

The electronic apparatus of this application may be any apparatus that uses the electrochemical apparatus according to the embodiments of this application.

In some embodiments, the electronic apparatus includes but is not limited to notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, automobiles, motorcycles, assisted bicycles, bicycles, lighting apparatuses, toys, game machines, clocks, electric tools, flashlights, cameras, large household storage batteries, lithium-ion capacitors, or the like.

The following uses a lithium-ion battery as an example to describe preparation of a lithium-ion battery with reference to specific examples. A person skilled in the art understands that the preparation method described in this application is only an example, and that all other suitable preparation methods fall within the scope of this application.

Example 1

Preparation of lithium-ion battery

1. Preparation of negative electrode

(1) Preparation of negative electrode active material

S1: Petroleum coke was selected as a raw material and was mixed with the hard pitch having a softening point of 230°C at a ratio of 1:0.15. Then the mixture was maintained at a temperature of 550°C for 3 h, followed by graphitization treatment at 3000°C for 150 h, to obtain a graphite active material.

S2: The graphite active material was mixed with soft pitch having a softening point of 70°C and heated to 80°C, where a mass ratio of the active material to the soft pitch was 1:0.05, and the pitch was evenly applied on the surface of the graphite active material.

S3: The above graphite active material coated with the pitch was mixed with the ammonium bicarbonate at a weight ratio of 100:3. The mixture was placed into a box-type furnace at a furnace loading rate of 50%, and was heated at a 300°C nitrogen atmosphere for 6 h to obtain the negative electrode active material, where the furnace loading rate herein was a ratio of the amount of materials to the volume of the furnace chamber of the heating device.

(2) Preparation of negative electrode

The resulting negative electrode active material, styrene-butadiene rubber (SBR), and sodium carboxymethyl cellulose (CMC) were dispersed in deionized water at a weight ratio of 97.7:1.2:1.1, and fully stirred and mixed to uniformity to obtain a negative electrode slurry. Acetylene black was applied on a copper foil to obtain a negative electrode current collector. The negative electrode slurry was applied onto the negative electrode current collector, followed by drying and cold pressing, to obtain the negative electrode.

2. Preparation of positive electrode

Lithium cobaltate ($LiCoO_2$), acetylene black, and polyvinylidene fluoride (PVDF) were fully stirred and well mixed in an appropriate amount of N-methylpyrrolidone (NMP) at a weight ratio of 96:2:2, then the mixture was applied on a positive electrode current collector aluminum foil, followed by drying and cold pressing to obtain the positive electrode.

3. Preparation of electrolyte

In a dry argon environment, ethylene carbonate (EC), propylene carbonate (PC), and diethyl carbonate (DEC) were mixed at a weight ratio of 1:1:1, and $LiPF_6$ was added and mixed well. The mixture was added with 3wt% fluoroethylene carbonate and 2wt% adiponitrile and mixed well to obtain the electrolyte, where a concentration of $LiPF_6$ was 1.15 mol/L.

4. Preparation of separator

A polyethylene (PE) porous polymer film having a thickness of 12 $\mu$m was used as the separator.

5. Preparation of lithium-ion battery

The positive electrode, the separator, and the negative electrode were stacked in sequence, so that the separator was placed between the positive electrode and the negative electrode for separation. Then the stack was wound to obtain a bare cell. The bare cell was welded with tabs, and then placed in an outer packaging aluminum foil film. Then the foregoing resulting electrolyte was injected into the dried bare cell, followed by processes such as vacuum packaging, standing, formation, shaping, and capacity testing, to obtain a lithium-ion battery.

Examples 2 to 16 and Comparative Examples 1 and 2

Preparation of negative electrode active material

The process of preparing the negative electrode active material was the same as that in Example 1, except that the corresponding negative electrode active material was prepared by adjusting the percentage (the graphite active material coated with the pitch and the ammonium bicarbonate were added at a weight ratio of 100:x) of the ammonium bicarbonate in the preparation step S3 and the heating temperature. For details, see Table 1.
Preparation of negative electrode, preparation of positive electrode, preparation of electrolyte, preparation of separator, and preparation of lithium-ion battery were the same as those in Example 1.

Testing method

1. Raman spectrum testing method

A laser microscopic confocal Raman spectrometer (HR Evolution) was used to test the Raman spectrum of the negative electrode active material: a small quantity of powder was placed in a sample tank and was flattened by using a glass sheet, and laser parameters are set to 1800 gr/mm, 532 nm, 50%, and 2s to test the Raman pattern of the characteristic peak of the sample.

2. Testing method for the specific surface area of the negative electrode active material

A specific surface area analyzer (Tristar II 3020M) was used to determine the specific surface of the negative electrode active material according to the nitrogen adsorption/desorption method: a sample of the negative electrode active material was dried in a vacuum drying oven, and then placed in a sample tube for measurement by the analyzer.

The proportion of the base surface of the graphite was determined: the end surface and the base surface of the graphite had different capability of adsorbing gases: the adsorption capability of the end surface was 20 e/k to 50 e/k, and the adsorption capability of the base surface was typically 50 e/k to 80 e/k. During the testing for the specific surface area, the proportion of the base surface was obtained by using software to perform fitting processing on the specific surface corresponding to different adsorption capability.

3. Testing method for the gram capacity and first-cycle coulombic efficiency of a lithium-ion battery

The lithium-ion battery was discharged at 0.05C to 5.0 mV, discharged at 50 $\mu$A to 5.0 mV, discharged at 20 $\mu$A to 5.0 mV, and charged at 0.1C to 2.0 V. The capacity of the lithium-ion battery at this point was recorded as the gram capacity. The first-cycle coulombic efficiency was obtained by the first-time charging gram capacity being divided by the first-time discharging gram capacity. 0.05C was a current value at 0.05 times the designed gram capacity, and 0.1C was a current value at 0.1 times the designed gram capacity.

4. Testing method for the cycling thickness swelling rate of the lithium-ion battery

At a temperature of 25°C, a ten-thousandth micrometer was used to test the thickness of the lithium-ion battery at 3.95 V, and the thickness was recorded as $H_0$. The lithium-ion battery underwent 500 charge-discharge cycles at a rate of 1.5C. During the cycle, after every 50 cycles, the thickness of the lithium-ion battery was measured at a voltage of 4.45 V and recorded as $H_n$. The cycling swelling rate of the lithium-ion battery was calculated according to the following formula:

$$\text{Cycling thickness swelling rate corresponding to the number of cycles} = (H_n - H_0)/H_0 \times 100\%.$$

Test result

Table 1 shows technological parameters of surface treatment of the negative electrode active material and related performance test results.

## Table 1

| Examples and comparative examples | Weight ratio of ammonium bicarbonate (%) | Temperature (°C) | $W_D$ (cm$^{-1}$) | $W_G$ (cm$^{-1}$) | $W_D/W_G$ | ID/IG | Specific surface area (m$^2$/g) | Proportion of base surface (%) | Most probable pore size (nm) | Proportion of pore volume (%) | Percentage of oxygen (%) | Gram capacity (mAh/g) | First-cycle coulombic efficiency (%) |
|---|---|---|---|---|---|---|---|---|---|---|---|---|---|
| Example 1 | 3 | 300 | 42 | 17 | 2.5 | 0.13 | 1.21 | 66 | 3.4 | 3.6 | 2.2 | 357 | 94.6 |
| Example 2 | 6 | 300 | 43 | 18 | 2.4 | 0.14 | 1.24 | 65 | 3.3 | 3.7 | 2.3 | 357 | 94.7 |
| Example 3 | 9 | 300 | 43 | 19 | 2.3 | 0.14 | 1.38 | 65 | 3.3 | 3.8 | 2.3 | 357 | 94.9 |
| Example 4 | 12 | 300 | 44 | 19 | 2.3 | 0.14 | 1.42 | 64 | 3.3 | 3.9 | 2.4 | 358 | 95.0 |
| Example 5 | 3 | 400 | 47 | 20 | 2.4 | 0.17 | 1.72 | 60 | 3.1 | 4.2 | 2.6 | 359 | 94.7 |
| Example 6 | 6 | 400 | 47 | 20 | 2.4 | 0.18 | 1.83 | 60 | 3.1 | 4.3 | 2.6 | 359 | 94.7 |
| Example 7 | 9 | 400 | 47 | 21 | 2.2 | 0.18 | 1.83 | 59 | 3.1 | 4.3 | 2.7 | 359 | 94.7 |
| Example 8 | 12 | 400 | 48 | 21 | 2.3 | 0.19 | 1.82 | 59 | 3.1 | 4.3 | 2.7 | 359 | 94.7 |
| Example 9 | 3 | 500 | 50 | 23 | 2.2 | 0.27 | 2.85 | 55 | 3.0 | 5.0 | 3.1 | 362 | 94.5 |
| Example 10 | 6 | 500 | 50 | 23 | 2.2 | 0.28 | 2.86 | 55 | 2.9 | 5.0 | 3.1 | 362 | 94.5 |
| Example 11 | 9 | 500 | 50 | 24 | 2.1 | 0.29 | 2.86 | 55 | 2.9 | 5.0 | 3.1 | 362 | 94.5 |

| Examples and comparative examples | Weight ratio of ammonium bicarbonate (%) | Temperature (°C) | $W_D$ (cm$^{-1}$) | $W_G$ (cm$^{-1}$) | $W_D/W_G$ | ID/IG | Specific surface area (m$^2$/g) | Proportion of base surface (%) | Most probable pore size (nm) | Proportion of pore volume (%) | Percentage of oxygen (%) | Gram capacity (mAh/g) | First-cycle coulombic efficiency (%) |
|---|---|---|---|---|---|---|---|---|---|---|---|---|---|
| Example 12 | 12 | 500 | 50 | 24 | 2.1 | 0.29 | 2.83 | 55 | 2.9 | 5.0 | 3.2 | 362 | 94.5 |
| Example 13 | 3 | 600 | 58 | 33 | 1.8 | 0.36 | 3.98 | 49 | 2.7 | 6.2 | 3.9 | 363 | 93.6 |
| Example 14 | 6 | 600 | 58 | 34 | 1.7 | 0.36 | 3.93 | 48 | 2.7 | 6.2 | 3.9 | 364 | 93.6 |
| Example 15 | 9 | 600 | 58 | 33 | 1.8 | 0.36 | 3.95 | 48 | 2.7 | 6.2 | 3.9 | 364 | 93.5 |
| Example 16 | 12 | 600 | 58 | 34 | 1.7 | 0.37 | 3.92 | 48 | 2.7 | 6.2 | 3.9 | 363 | 93.5 |
| Comparative Example 1 | 1 | 50 | 39 | 15 | 2.6 | 0.08 | 0.80 | 70 | 3.5 | 3.0 | 2.0 | 356 | 94.5 |
| Comparative Example 2 | 15 | 1000 | 175 | 110 | 1.6 | 1.20 | 5.40 | 40 | 2.5 | 8.0 | 5.0 | 365 | 90.0 |

It can be seen from Example 1 to example 4, Example 5 to example 8, Example 9 to Example 12, and example 13 to example 16 that at a lower treatment temperature below 300°C, by adding ammonium bicarbonate incrementally, $CO_2$ gas flow produced by decomposition increased, and peak widths at half heights of peak G and peak D in the Raman pattern of the negative electrode active material slightly increased, meaning that a surface disorder degree of the active material increased, and crystallinity slightly decreased due to crystalline structure damages caused by slight oxidation on the surface of the active material. After the treatment temperature increased, the gas flow produced inconspicuous influence, meaning that with sufficient gas flow, oxidation reaction levels on the surface of the material are essentially the same. In addition, the same conclusion can be obtained from other performance parameters such as the specific surface area and gram capacity of the active material. In addition, it can be seen from Example 1 to Example 4 that the first-cycle coulombic efficiency of the material was improved slightly. This was because slight oxidation occurred at low temperature and some -OH functional groups on the surface of graphite were reduced, where these functional groups were apt to have side reactions with the electrolyte.

It can be seen from Example 2, Example 6, Example 10, and Example 14 that, with a constant addition of the ammonium bicarbonate, increasing the temperature resulted in a significant increase in peak widths at half heights of peak G and peak D in the Raman pattern of the active material (the same conclusion can be obtained from Example 3, Example 7, Example 11, Example 15, Example 4, Example 8, Example 12, and Example 16.) Therefore, increasing temperature significantly enhanced the oxidation reaction level on the surface. In addition, as the temperature rose, both the specific surface area of the active material and oxygen concentration significantly increased, meaning that after the oxidation reaction occurred on the surface of the material, C in part of the lattice oxidized to form some porous structures. In addition, the proportion of the base surface decreased, meaning that most of the reactions occurred on the end surface of the graphite, causing the proportion of the specific surface area of the end surface to increase. These porous structures could effectively store lithium, so as to obviously increase the gram capacity of the material. However, due to increase in the specific surface area, the active material had more side reactions with the electrolyte, affecting the first-cycle coulombic efficiency on the whole.

It can be seen from Comparative Examples 1 and 2 that after reducing the addition of the ammonium bicarbonate and lowering the reaction temperature, the peak width at half height of peak G in the Raman pattern of the active material decreased, meaning that the shape of the peak was sharp and crystallinity of the material was high. In addition, the material had small specific surface area and low gram capacity, meaning a low oxidation reaction level. After the temperature improved and the quantity of ammonium bicarbonate increased, oxidation reaction of the active material was extremely violent, peak intensity ratios of peak D to peak G in Raman pattern representing the surface defect degree of the material significantly increased, the gram capacity increased, but the first-cycle coulombic efficiency obviously decreased, which was not conducive to improving the energy density of the lithium-ion battery.

Table 2 shows the impacts of the heating time and loading amount of samples in the heating device on the tap density, compacted density, and specific surface area of the negative electrode active material, button battery capacity, and the cycling thickness swelling rate of the lithium-ion battery during preparation of the negative electrode active material.

The negative electrode active material in Examples 17 to 32 was obtained based on the preparation conditions of negative electrode active material in Example 9 by adjusting the heating time and furnace loading rate under a nitrogen atmosphere in S3.

The furnace loading rate is a ratio of a volume of actually-loaded powder to a total volume of the furnace chamber of the heating device.

B 1 is a specific surface area of the negative electrode active material without any applied pressure, and B2 is a specific surface area of the negative electrode active material after being pressed under a pressure of 1t. The method for applying pressure on the negative electrode is as follows: an electronic pressure testing machine (UTM7305 of SUNS) is used to place 1.0 g $\pm$ 0.05 g of negative electrode active material powder onto a mold having a diameter of 13 mm, a pressure of 1t is applied on the negative electrode active material powder for 5s, and the pressure is released and the powder is removed.

B11 is a specific surface area obtained by disassembling a negative electrode from the electrochemical apparatus discharged to 3 V and scrapping powder. C1 is a gram capacity of a button half-cell discharged to 5.0 mV, where the button half-cell is assembled using the Li plate after the negative electrode plate is disassembled from the lithium-ion battery discharged to 3 V; and C2 is a gram capacity of the foregoing lithium-ion battery discharged to 0 mV. The specific discharge flow is as follows: the lithium-ion battery was discharged at 0.05C to 5.0 mV or 0 mV, discharged at 50 $\mu$A to 5.0 mV or 0 mV, discharged at 20 $\mu$A to 5.0 mV or 0 mV, and charged at 0.1C to 2.0 V The capacity of the lithium-ion battery at this point was recorded as the gram capacity. 0.05C was a current value at 0.05 times the designed gram capacity, and 0.1C was a current value at 0.1 times the designed gram capacity.

**Table 2**

| Example | Time (h) | Furnace loading rate (%) | Tap density (g/cc) | Compacted density (g/cc) | B1 (m²/g) | B2 (m²/g) | (B2-B1)/B1×100% (%) | B11 (m²/g) | C1 (mAh/g) | C2 (mAh/g) | C2–C1 (mAh/g) | Thickness swelling rate after 500 cycles (%) |
|---|---|---|---|---|---|---|---|---|---|---|---|---|
| Example 9 | 6 | 50 | 0.99 | 1.99 | 2.85 | 4.73 | 66 | 4.79 | 358.7 | 362.0 | 3.3 | 6.8% |
| Example 17 | 4 | 60 | 1.02 | 1.94 | 2.81 | 4.59 | 63 | 4.66 | 356.5 | 358.0 | 1.5 | 6.3% |
| Example 18 | 4 | 70 | 1.03 | 1.93 | 2.78 | 4.49 | 62 | 4.52 | 356.4 | 357.8 | 1.4 | 6.2% |
| Example 19 | 4 | 80 | 1.04 | 1.92 | 2.72 | 4.41 | 62 | 4.48 | 356.2 | 357.4 | 1.2 | 6.1% |
| Example 20 | 4 | 90 | 1.05 | 1.9 | 2.70 | 4.30 | 59 | 4.35 | 356.0 | 357.0 | 1.0 | 6.0% |
| Example 21 | 6 | 60 | 1.00 | 1.99 | 2.83 | 4.69 | 66 | 4.71 | 358.1 | 361.2 | 3.1 | 6.7% |
| Example 22 | 6 | 70 | 1.01 | 1.98 | 2.82 | 4.68 | 66 | 4.77 | 357.6 | 360.7 | 3.1 | 6.7% |
| Example 23 | 6 | 80 | 1.02 | 1.97 | 2.80 | 4.69 | 68 | 4.74 | 357.2 | 359.6 | 2.4 | 6.6% |
| Example 24 | 6 | 90 | 1.03 | 1.96 | 2.80 | 4.67 | 67 | 4.72 | 357.1 | 359.1 | 2.0 | 6.5% |
| Example 25 | 8 | 60 | 0.95 | 2.01 | 3.10 | 5.26 | 70 | 5.3 | 359.0 | 363.1 | 4.1 | 7.3% |

| Example | Time (h) | Furnace loading rate (%) | Tap density (g/cc) | Compacted density (g/cc) | B1 (m²/g) | B2 (m²/g) | (B2-B1)/B1×100% (%) | B11 (m²/g) | C1 (mAh/g) | C2 (mAh/g) | C2-C1 (mAh/g) | Thickness swelling rate after 500 cycles (%) |
|---|---|---|---|---|---|---|---|---|---|---|---|---|
| Example 26 | 8 | 70 | 0.96 | 2.01 | 3.06 | 5.29 | 73 | 5.34 | 358.9 | 363.2 | 4.3 | 7.3% |
| Example 27 | 8 | 80 | 0.97 | 2.02 | 3.06 | 5.25 | 72 | 5.28 | 358.7 | 363.1 | 4.4 | 7.2% |
| Example 28 | 8 | 90 | 0.98 | 2.01 | 3.04 | 5.21 | 71 | 5.29 | 358.6 | 362.5 | 3.9 | 7.1% |
| Example 29 | 10 | 60 | 0.90 | 2.05 | 3.20 | 5.77 | 80 | 5.9 | 359.1 | 365.0 | 5.9 | 8.0% |
| Example 30 | 10 | 70 | 0.91 | 2.04 | 3.19 | 5.71 | 79 | 5.78 | 359.0 | 364.6 | 5.6 | 8.0% |
| Example 31 | 10 | 80 | 0.92 | 2.04 | 3.18 | 5.73 | 80 | 5.76 | 358.8 | 364.3 | 5.5 | 8.0% |
| Example 32 | 10 | 90 | 0.93 | 2.03 | 3.18 | 5.71 | 80 | 5.77 | 358.9 | 364.1 | 5.2 | 7.9% |

It can be seen by separately comparing Examples 17 to 20, Examples 21 24, Examples 25 to 28, and Examples 29 to 32 that without changing heating time, after the furnace loading rate was increased, the tap density of the negative electrode active material was increased, compacted density was decreased, and C2 and C1 capacities were decreased, meaning that the oxidation degree of the negative electrode active material was slightly reduced. This was caused by insufficient contact between the powder and the gas due to increasing loading amount of the material. In addition, the cycling swelling rate of the lithium-ion battery containing such negative electrode active material was slightly decreased, meaning that oxidation degree might impact structural stability of the material.

It can be seen by separately comparing Examples 17, 21, and 25 with Example 29, comparing Examples 18, 22, and 26 with Example 30, comparing Examples 19, 23, and 27 with Example 31, and comparing Examples 20, 24, and 28 with Example 32 that: after the reaction time was prolonged, the compacted density of the negative electrode active material was obviously increased, but the specific surface area change rate (B2-B 1)/B 1 was increased before and after the material was subjected to a pressure, leading to increase in the swelling rate of the lithium-ion battery. In addition, the gram capacity of the negative electrode active material from 5.0 mV to 0 mV was significantly increased. The performance difference of the foregoing negative electrode active material was related to the oxidation reaction level and position. It is supposed that after the violent oxidation reaction, defects such as dislocations on the surface of the negative electrode active material may be reduced, so as to make the negative electrode active material apt to have inter-layer contractions and slips when after being pressed under the pressure, causing the powder compacted density of the negative electrode active material to be improved. In addition, these oxidation reactions may further remove the binder between the negative electrode active material secondary particles, leading to unstable structures of the secondary particles, thereby enlarging the swelling in the lithium-ion battery.

References to "some embodiments", "some of the embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

**Claims**

1. A negative electrode active material, comprising graphite and amorphous carbon; wherein the negative electrode active material satisfies $1.6 \leq W_D/W_G \leq 2.6$ according to Raman testing, wherein $W_D$ is a peak width at half height of peak D within 1340 cm$^{-1}$ to 1370 cm$^{-1}$ in the Raman spectrum, and 40 cm$^{-1} \leq W_D \leq 100$ cm$^{-1}$; and $W_G$ is a peak width at half height of peak G within 1570 cm$^{-1}$ to 1590 cm$^{-1}$, and 15 cm$^{-1} \leq W_G \leq 50$ cm$^{-1}$.

2. The negative electrode active material according to claim 1, wherein

$$1.7 \leq W_D/W_G \leq 2.5.$$

3. The negative electrode active material according to claim 1 or 2, wherein the negative electrode active material satisfies at least one of the following conditions (i) to (iv):

(i)

$$2 \leq W_D/W_G \leq 2.5;$$

(ii)

$$40 \text{ cm}^{-1} \leq W_D \leq 60 \text{ cm}^{-1};$$

(iii)

$$15\ \text{cm}^{-1} \leq W_G \leq 35\ \text{cm}^{-1};$$

or

(iv) the negative electrode active material satisfies $0.1 \leq ID/IG \leq 1.0$, wherein ID is an intensity of the peak D, and IG is an intensity of the peak G.

4. The negative electrode active material according to any one of claims 1 to 3, wherein the negative electrode active material comprises a base surface and an end surface, wherein a roughness of the end surface is greater than a roughness of the base surface.

5. The negative electrode active material according to any one of claims 1 to 4, wherein the negative electrode active material comprises a base surface and an end surface, wherein a specific surface area of the base surface accounts for 40% to 70% of a specific surface area of the negative electrode active material.

6. The negative electrode active material according to any one of claims 1 to 5, wherein the negative electrode active material has a most probable pore size of 2.5 nm to 3.5 nm, wherein a pore volume of the most probable pore size of the negative electrode active material accounts for 3% to 8% of a pore volume of the negative electrode active material.

7. The negative electrode active material according to any one of claims 1 to 6, wherein the negative electrode active material has a specific surface area B1 and a specific surface area B2 after being pressed under a pressure of 1t, wherein $(B2-B1)/B1 \times 100\% \leq 80\%$.

8. The negative electrode active material according to any one of claims 1 to 7, wherein a specific surface area of the negative electrode active material is B1, wherein

$$1.0\ \text{cm}^2/\text{g} \leq B1 \leq 4.5\ \text{cm}^2/\text{g};$$

9. The negative electrode active material according to any one of claims 1 to 8, wherein the negative electrode active material has a most probable pore size of 2.7 nm to 3.3 nm, wherein a pore volume of the most probable pore size of the negative electrode active material accounts for 3.5% to 7% of the pore volume of the negative electrode active material; and/or
the negative electrode active material comprises a base surface and an end surface, a specific surface area of the base surface accounts for 45% to 65% of a specific surface area of the negative electrode active material.

10. The negative electrode active material according to any one of claims 1 to 9, wherein oxygen in the negative electrode active material has a mass percentage of 2% to 5% according to an X-ray photoelectron spectroscopy testing.

11. The negative electrode active material according to any one of claims 1 to 10, wherein the negative electrode active material has a tap density of 0.90 g/cm$^3$ to 1.05 g/cm$^3$; and/or the negative electrode active material has a powder compacted density of 1.9 g/cm$^3$ to 2.05 g/cm$^3$ after being pressed under a pressure of 5t.

12. An electrochemical apparatus, comprising a negative electrode; the negative electrode comprises a negative electrode current collector and a negative electrode active material layer disposed on at least one surface of the negative electrode current collector, wherein the negative electrode active material layer comprises the negative electrode active material according to any one of claims 1 to 11.

13. The electrochemical apparatus according to claim 12, wherein the negative electrode active material has a specific surface area of 4.35 cm$^2$/g to 5.9cm$^2$/g.

14. The electrochemical apparatus according to claim 12 or 13, wherein according to a charge-discharge testing on a button battery composed of the negative electrode and a lithium metal, the button battery has a reversible capacity of C1 mAh/g at a voltage ranging from 0.005 V to 2 V, and has a reversible capacity of C2 mAh/g at a voltage ranging from 0 V to 2 V, and $C2-C1 \geq 1$.

15. An electronic apparatus, comprising the electrochemical apparatus according to any one of claims 12 to 14.

FIG. 1

FIG. 2

FIG. 3